# EUROPÄISCHE PATENTSCHRIFT

(11) **EP 2 171 549 B1**
(45) Veröffentlichungstag und Bekanntmachung des Hinweises auf die Patenterteilung: **09.12.2015**
(21) Anmeldenummer: 08773927.2
(22) Anmeldetag: 09.07.2008
(51) Int. Cl.: G05B 9/03

(54) **SICHERHEITSVORRICHTUNG ZUM MEHRKANALIGEN STEUERN EINER SICHERHEITSTECHNISCHEN EINRICHTUNG**
SAFETY APPARATUS FOR THE MULTICHANNEL CONTROL OF A SAFETY DEVICE
DISPOSITIF DE SÉCURITÉ POUR LA COMMANDE PAR PLUSIEURS CANAUX D'UN DISPOSITIF DE LA TECHNIQUE DE SÉCURITÉ

(30) Priorität: 12.07.2007 DE 102007032827
(43) Veröffentlichungstag der Anmeldung: 07.04.2010
(60) Teilanmeldung: 10002850.5
(73) Patentinhaber: Phoenix Contact GmbH & Co. KG, 32825 Blomberg (DE)
(72) Erfinder: FREVERT, Henning, 32657 Lemgo (DE)
(74) Vertreter: Kampfenkel, Klaus
(86) Internationale Anmeldenummer: PCT/EP2008/005600
(87) Internationale Veröffentlichungsnummer: WO 2009/007104

(56) Entgegenhaltungen:
- WO-A-01/75532
- WO-A-2007/014725
- DE-A1-102004 020 995

## Beschreibung

Die Erfindung betrifft eine Sicherheitsvorrichtung zum mehrkanaligen Steuern einer sicherheitstechnischen Einrichtung nach der Patentanmeldung Nr. 10 2006 001805.

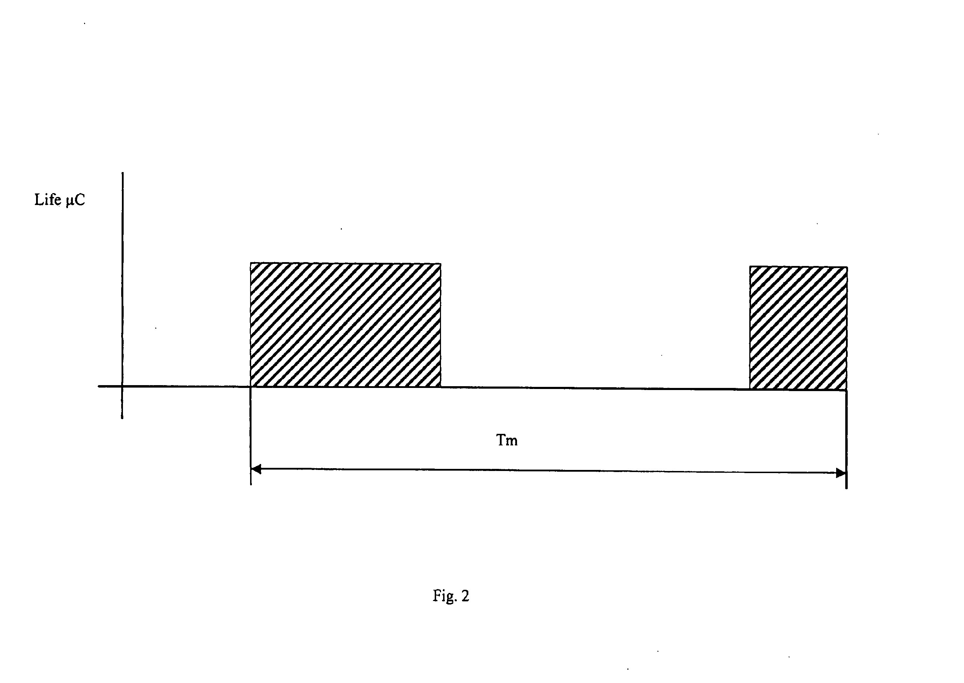

Die Patentanmeldung Nr. 10 2006 001805 offenbart eine mehrkanalige Sicherheitsvorrichtung mit der eine sicherheitstechnische Einrichtung wie zum Beispiel ein Industrieroboter als Komponente einer Automatisierungsanlage oder die komplette Automatisierungsanalge in einen gesicherten Zustand gefahren werden kann. Ein sicherer Zustand liegt beispielsweise vor, wenn die Stromversorgung des Industrieroboters oder der Automatisierungsanlage abgeschaltet oder eine Sicherheitstür verriegelt wird, die den Zugang zum Industrieroboter verhindert. Die Sicherheitsvorrichtung weist eine mit einer Mikroprozessor gesteuerten Steuereinrichtung und eine weitere, rein hardwarebasierten Steuereinrichtung auf. Die hardwarebasierte Steuereinrichtung zeichnet sich dadurch aus, das sie nicht durch einen Mikroprozessor gesteuert wird, sondern eine schaltungstechnische Realisierung, vorzugsweise ein Monoflop als Schalt- oder Steuereinheit verwendet. Beiden Steuereinrichtungen wird ein moduliertes Eingangssignal zugeführt. Das Modulationssignal zeigt an, ob die Mikroprozessor gesteuerte Steuereinrichtung fehlerfrei arbeitet. Insbesondere weist das Modulationssignal darauf hin, ob der Mikroprozessor sicherheitsrelevante Programme oder Programmteile korrekt abarbeitet. Ein sicherheitsrelevantes Programm kann ein Diagnoseverfahren ausführen, die Stromversorgung der Steuereinrichtung prüfen, Systemparameter, wie zum Beispiel die Kontaktstellungen eines von den Steuereinrichtungen angesteuerten Relais abfragen, den Betriebszustand der hardwarebasierten Steuereinrichtung zyklisch abfragen und dergleichen. Wenn der Mikroprozessor sicherheitsrelevante Programme oder Programmteile, das können Unterprogramme sein, nicht wie spezifiziert abarbeitet, verharrt das Modulationssignal in einem statischen Zustand, der einem anhaltenden High- oder Low-Pegel entspricht. Beispielsweise gibt die Steuereinrichtung einen High-Pegel als Modulationssignal aus, wenn ein sicherheitsrelevantes Programm nicht gestartet wird. Ein Low-Pegel kann dann von der Steuereinrichtung als Modulationssignal erzeugt werden, wenn ein sicherheitsrelevantes Programm nicht, wie spezifiziert, beendet wird. Im ordnungsgemäßen Betrieb erzeugt die Mikroprozessor gesteuerte Steuereinrichtung ein dynamisches Modulationssignal, wie es beispielsweise in Fig. 2 gezeigt ist. Nur wenn ein dynamisches Signal am Eingang der hardwarebasierten Steuereinrichtung anliegt, wird eine Schalteinrichtung derart angesteuert, dass eine sicherheitstechnische Einrichtung, zum Beispiel ein Industrieroboter, eine Automatisierungsanlage und dergleichen, ordnungsmäßig betrieben werden kann. Liegt ein statisches Signal an der hardwarebasierten Steuereinrichtung an, wird die Schalteinrichtung deaktiviert, so dass der Industrieroboter in einen gesicherten Zustand gefahren wird. Dank der mehrkanaligen Sicherheitsvorrichtung kann eine sicherheitstechnische Einrichtung von der hardwarebasierten Steuereinrichtung in einen sicheren Zustand gefahren werden, auch wenn die Mikroprozessor gesteuerte Steuereinrichtung fehlerhaft arbeitet. Wird ein Monoflop in der hardwarebasierten Steuereinrichtung als Steuereinheit verwendet, darf die Monozeit nicht länger als die spezifizierte Sicherheitsausschaltzeit sein. Sicherheitskritische Fehler in der hardwarebasierten Steuereinrichtung kann die Mikroprozessor gesteuerte Steuereinrichtung erkennen, da ihr die Übertragungsfunktion der hardwarebasierten Steuereinrichtung, z. B. die Übertragungsfunktion des Monoflops, bekannt ist, und ihr zudem das Eingangs- und Ausgangssignal der hardwarebasierten Steuereinrichtung zugeführt werden. Aus der Übertragungsfunktion und dem Eingangssignal der hardwarebasierten Steuereinrichtung kann die Mikroprozessor gesteuerte Steuereinrichtung das zu erwartende Ausgangssignal der hardwarebasierten Steuereinrichtung berechnen und dieses dann mit dem rückgekoppelten Ausgangssignal vergleichen. Stimmen die beiden Signale nicht überein, schaltet die Mikroprozessor gesteuerte Steuereinrichtung die Schalteinrichtung derart an, dass die sicherheitstechnische Einrichtung in den sicheren Zustand gefahren werden kann.

Eine derartige mehrkanalige Sicherheitsvorrichtung ist ebenfalls aus der WO2007/014725 A bekannt, welche den Oberbegriff des Anspruchs 1 bildet.

Automatisierungsanlagen umfassen in der Regel Feldbussysteme, an die Aktoren, Sensoren sowie über- und/oder untergeordnete Steuer- und Überwachungseinrichtungen angeschaltet sein können. Eine wichtige Anforderung an derartige Automatisierungsanlagen ist, dass insbesondere bei Auftritt eines Fehlers eine fehlerhafte sicherheitstechnische Komponente, z. B. ein Aktor oder sogar die gesamte Automatisierungsanlage in einen gesicherten Zustand gefahren werden kann. Um ein sicheres Abschalten der Automatisierungsanlage oder eines fehlerhaften Aktors zu ermöglichen, muss sichergestellt sein, dass ein definiertes Eingangssignal, welches die Automatisierungsanlage in den sicheren Zustand fahren soll, immer als ein Ausschaltsignal interpretiert wird.

Bei Anlagen und Geräten, die zu einer bestimmten Sicherheitskategorie gehören, werden beispielsweise mehrkanalige Überwachungssysteme verwendet, die unabhängig voneinander arbeitende Subsysteme enthalten, die jeweils für sich die Anlage oder einzelne Geräte in einen gesicherten Zustand fahren können. Die mehrkanaligen oder redundant aufgebauten Überwachungssysteme sind weiterhin derart ausgebildet, dass die Subsysteme die Funktionsfähigkeit des jeweils anderen Subsystems überwachen können. Die gegenseitige Überwachung erfolgt in der Regel durch einen bidirektionalen Austausch von Statusdaten. Bei den bekannten mehrkanaligen Überwachungssystemen weist jedes Subsystem einen eigenen Mikroprozessor auf, wobei jedes Subsystem die Anlage in einen sicheren Zustand fahren kann.

Ein entsprechendes mehrkanaliges Meldegerät für eine Sicherheitsschaltung ist aus der DE 10 2004 020 995 A1 bekannt.

Der vorliegenden Erfindung liegt die Aufgabe zugrunde, eine Sicherheitsvorrichtung zum mehrkanaligen Steuern einer sicherheitstechnischen Einrichtung zu schaffen, welche die sicherheitstechnische Einrichtung zuverlässiger als bisher ansteuern kann.

Gemäß einem weiteren Gesichtspunkt der Erfindung kann die Sicherheitsvorrichtung die Bedingungen der Kat. 4 der DIN EN 954 erfüllen.

Kat. 4 der DIN EN 954 verlangt unter Anderem, dass Fehler in den Leitungen zu und von einem Sensor, z. B. ein Not-Aus-Taster, erkannt werden. Derartige Fehler können Kurzschlüsse in den zu- oder abgehenden Leitungen zur Betriebsspannung oder nach Masse oder auch Querschlüsse zwischen den Leitern sein. Zudem verlangt Kat. 4 der DIN EN 954, dass ein Fehler in der Mikroprozessor gesteuerten Steuereinrichtung beim Zustandswechsel, insbesondere beim Einschalten der sicherheitstechnischen Einrichtung, von der anderen Steuereinrichtung erkannt wird.

Ein Kerngedanke der Erfindung ist darin zu sehen, Maßnahmen bereitzustellen, mit denen die hardwarebasierte Sicherheitseinrichtung deaktiviert werden kann, wenn beim Starten oder Anfahren der sicherheitstechnischen Einrichtung die Mikroprozessor gesteuerte Steuereinrichtung nicht mehr in der Lage ist, die sicherheitstechnische Einrichtung in einen sicheren Zustand zu fahren. In diesem Fall hält die hardwarebasierte Steuereinrichtung die sicherheitstechnische Einrichtung im sichern Zustand, d. h. die sicherheitstechnische Einrichtung kann nicht betrieben werden. An dieser Stelle sei darauf hingewiesen, das mit einer Mikroprozessor gesteuerten Steuereinrichtung eine Einrichtung zu verstehen ist, die mittels eines programmgesteuerten Mikroprozessors entscheidet, ob die sicherheitstechnische Einrichtung in Betrieb genommen, z. B. anfahren, oder in einen sichern Zustand gefahren werden soll. Unter einer hardwarebasierten Steuereinrichtung ist eine Einrichtung zu verstehen, die anstelle eines Mikroprozessors eine elektronische Schaltung, z. B. ein Monoflop, enthält, welche bei Anlegen eines Eingangssignals ein vorbestimmtes Ausgangssignal erzeugt.

Das oben genannte technische Problem löst die Erfindung zum Einen mit den Merkmalen des Anspruchs 1.

Danach ist eine Sicherheitsvorrichtung zum mehrkanaligen Steuern einer sicherheitstechnischen Einrichtung vorgesehen.

An dieser Stelle sei darauf hingewiesen, dass es sich bei einer sicherheitstechnischen Einrichtung um einen Aktor einer Automatisierungsanlage, beispielsweise um einen Industrieroboter, eine ausführbare sicherheitstechnische Anwendung und/oder um eine Automatisierungsanlage selbst handeln kann. Hierzu ist eine erste, mikroprozessorgesteuerte Steuereinrichtung vorgesehen, die eine Signalerzeugungseinrichtung zum Erzeugen eines ersten Überwachungssignals aufweist. Das erste Überwachungssignal zeigt den aktuellen Betriebszustand der ersten Steuereinrichtung an. Vorzugsweise zeigt das erste Überwachungssignal an, ob der Mikroprozessor der ersten Steuereinrichtung in einer spezifizierten Weise arbeitet. Weiterhin sind eine zweite Steuereinrichtung sowie eine von der ersten und zweiten Steuereinrichtung ansteuerbare Schalteinrichtung vorgesehen. Die Schalteinrichtung kann die sicherheitstechnische Einrichtung einschalten oder in einen gesicherten Zustand fahren. An dieser Stelle sei erwähnt, dass vorteilhafterweise die Schalteinrichtung die sicherheitstechnische Einrichtung einschaltet, wenn sie von beiden Steuereinrichtungen aktiviert wird, wohingegen die sicherheitstechnische Einrichtung in einen gesicherten Zustand gefahren werden kann, wenn sie von wenigstens einer der beiden Steuereinrichtungen deaktiviert wird. Die zweite Steuereinrichtung weist eine hardwarebasierte Schalteinrichtung auf, die unter Ansprechen auf das Überwachungssignal die Schalteinrichtung derart ansteuert, dass die sicherheitstechnische Einrichtung bei einem fehlerhaften Betrieb der ersten Steuereinrichtung in einen sicheren Zustand gefahren werden kann. Bei einer zweckmäßigen Ausführungsform geschieht dies dann, wenn der Mikroprozessor nicht mehr die spezifizierten Funktionen ausführt. Darüber hinaus ist der ersten Steuereinrichtung eine Einrichtung zum Erzeugen eines Freigabesignals für die zweite Steuereinrichtung zugeordnet. Auf diese Weise wird sichergestellt, dass zum Beispiel bei einem angeforderten Anschalten der sicherheittechnischen Einrichtung das Anschalten nur dann erfolgt, wenn die erste mikroprozessorgesteuerte Steuereinrichtung ordnungsgemäß arbeitet. Im Fehlerfall wird kein Freigabesignal an die zweite Steuereinrichtung angelegt, so dass die sicherheitstechnische Einrichtung im sicheren Zustand verweilt. Ein Fehlerfall liegt zum Beispiel vor, wenn die erste Steuereinrichtung die sicherheitstechnische Einrichtung überhaupt nicht mehr abschalten kann.

Die Schalteinrichtung weist ein erstes, der ersten Steuereinrichtung zugeordnetes Sicherheitsrelais und ein zweites, der zweiten Steuereinrichtung zugeordnetes Sicherheitsrelais auf. Angemerkt sei, dass die erste Steuereinrichtung und das ihr zugeordnete erste Sicherheitsrelais als Kanal 1 und die zweite Steuereinrichtung und das ihr zugeordnete zweite Sicherheitsrelais als Kanal 2 der mehrkanaligen Sicherheitsvorrichtung bezeichnet werden kann. Jedes Sicherheitsrelais weist zwangsgeführte Kontakte auf. Dies bedeutet, dass jedes Sicherheitsrelais wenigstens einen Öffnerkontakt und einen Schließerkontakt aufweist, die miteinander starr gekoppelt sind. Dies führt dazu, dass zwangsläufig ein Kontakt geöffnet ist und der andere Kontakt geschlossen ist. Das Freigabesignal wird nur bei fehlerfreier Funktion des ersten Sicherheitsrelais erzeugt. Damit ist sichergestellt, dass die zweite Steuereinrichtung einen sicherheitskritischen Ausfall im Kanal 1 erkennen kann, insbesondere wenn bei einem Zustandswechsel der Schließerkontakt des ersten Sicherheitsrelais sich nicht mehr öffnet. Unter einem Zustandswechsel versteht man einen Wechsel der Betriebsart der Anlage, beispielsweise wenn die sicherheitstechnische Einrichtung hochgefahren werden soll. An dieser Stelle sei bereits angemerkt, dass die zweite Steuereinrichtung nur das Freigabesignal bei einem Zustandswechsel erhält, wenn das erste Sicherheitsrelais, welches der ersten Steuereinrichtung zugeordrlet ist, ordnungsgemäß arbeitet. Wenn nicht, erhält die zweite Steuereinrichtung kein Freigabesignal, was dazu führt, dass die zweite Steuereinrichtung das ihr zugeordnete zweite Sicherheitsrelais nicht ansteuert, so dass die sicherheitstechnische Einrichtung im sichern Zustand verteilt.

Vorteilhafte Ausführungsformen sind Gegenstand der Unteransprüche.

Um einen fehlerhaften oder einen fehlerfreien Betrieb der ersten Steuereinrichtung erkennen zu können, erzeugt die Signalerzeugungseinrichtung ein Wechselsignal, wenn die erste Steuereinrichtung, insbesondere der Mikroprozessor, fehlerfrei arbeitet, wohingegen ein Gleichsignal erzeugt wird, wenn die erste Steuereinrichtung, vorzugsweise der Mikroprozessor, fehlerhaft arbeitet.

Um eine kostengünstige zweite Steuereinrichtung aufbauen zu können, weist die hardwarebasierte Schalteinrichtung ein Monoflop auf.

Das Monoflop weist einen Master-Reset-Eingang zum Anlegen des Freigabesignals und einen Triggereingang auf, an den das erste Überwachungssignal unmittelbar oder, wie nachfolgend noch erläutert wird, mittelbar zugeführt wird. Das Monoflop der zweiten Steuereinrichtung steuert das ihm zugeordnete zweite Sicherheitsrelais nur dann an, wenn sowohl das Freigabesignal anliegt, als auch ein Überwachungssignal erzeugt worden ist, welches den ordnungsgemäßen Betriebszustand der ersten Steuereinrichtung, insbesondere den ordnungsgemäßen Funktionszustand des Mikroprozessors anzeigt.

Damit das Monoflop auch während des ordnungsgemäßen Betriebs aktiviert bleibt, ist dem Monoflop eine Schaltung zum Halten des Master-Reset-Eingangs auf dem Pegel des Freigabesignals zugeordnet. Das Monoflop wird automatisch zurückgesetzt, wenn am Triggereingang kein Signal oder ein statisches Signal anlegt, welches einen fehlerhaften Betrieb, insbesondere des Mikroprozessors der ersten Steuereinrichtung anzeigt.

Damit die mehrkanalige Sicherheitsvorrichtung auch als Stand-Alone-Gerät arbeiten kann, ist der ersten und zweiten Steuereinrichtung eine Eingangsstufe zugeordnet, die zum Modulieren eines von einer extern anschaltbaren Sensoreinrichtung kommenden Eingangssignals mit dem von der Signalerzeugungseinrichtung erzeugten ersten Überwachungssignal ausgebildet ist. In diesem Fall handelt es sich bei der Sensoreinrichtung um einen aktiven Sensor, welcher ein Ausgangssignal selbst erzeugen kann. Ein aktiver Sensor kann eine Schutztür sein. Im Unterschied dazu bildet ein Not-Aus-Taster einen passiven Sensor.

Die erste Steuereinrichtung und/oder die zweite Steuereinrichtung können unter Ansprechen auf das modulierte Eingangssignal die sicherheitstechnische Einrichtung in einen sicheren Zustand steuern, wobei das erste modulierte Eingangssignal an den Triggereingang der hardwarebasierten Schaltungseinrichtung angelegt ist. Bei einem fehlerhaften Betrieb der ersten Steuereinrichtung ist das modulierte Eingangssignal ein statisches Signal, welches vom Mikroprozessor der ersten Steuereinrichtung als Fehlersignal erkannt wird, woraufhin der Mikroprozessor das der ersten Steuereinrichtung zugeordnete erste Sicherheitsrelais deaktiviert. Das Monoflop der zweiten Steuereinrichtung wird durch das statische Eingangssignal deaktiviert, so dass auch das der zweiten Steuereinrichtung zugeordnete zweite Sicherheitsrelais deaktiviert wird oder bleibt.

Um Kurzschlüsse in den zuführenden und abführenden Leitungen eines extern anschaltbaren passiven Sensors und Kurzschlüsse in den abführenden Leitungen eines aktiven Sensors erkennen zu können, ist die Signalerzeugungseinrichtung der ersten Steuereinrichtung zum Erzeugen eines zweiten Überwachungssignals ausgebildet. Das zweite Überwachungssignal signalisiert ebenfalls den aktuellen Betriebszustand der ersten Steuereinrichtung, insbesondere des Mikroprozessors. Die beiden Überwachungssignale unterscheiden sich lediglich darin, dass, wenn es sich um ein Wechselsignal handelt, eine Phasenverschiebung zwischen beiden Überwachungssignalen besteht. Die Eingangsstufe ist in diesem Fall zum Modulieren eines von der ersten anschaltbaren Sensoreinrichtung kommenden zweiten Eingangssignals mit dem von der Signalerzeugungseinrichtung erzeugten zweiten Überwachungssignal ausgebildet. Das zweite modulierte Eingangssignal wird lediglich der ersten Steuereinrichtung zugeführt. Auf diese Weise können Kurzschlüsse der zu- und abführenden Leitungen von der ersten und/oder zweiten Steuereinrichtung erkannt werden, während Querschlüsse zwischen den zuführenden und abführenden Sensorleitungen von beiden Steuereinrichtungen erkannt werden, da in diesem Fall das vom Sensor ausgegebene Eingangssignal ein statisches Signal ist, welches sowohl vom Mikroprozessor der ersten Steuereinrichtung als auch vom Monoflop der zweiten Steuereinrichtung als Fehler erkannt wird. Unter Ansprechen auf einen Querschluss oder einen Kurzschluss in den ab- und/oder zuführenden Sensorleitungen werden die den ersten und zweiten Steuereinrichtungen zugeordneten Sicherheitsrelais deaktiviert, wodurch die sicherheitstechnische Einrichtung in einen sicheren Zustand gefahren wird, indem beispielsweise die Stromversorgung abgeschaltet wird.

In vorteilhafter Weise weist die Eingangsstufe hierzu eine erste Verknüpfungseinrichtung zur UND-Verknüpfung des ersten Eingangssignals mit dem ersten Überwachungssignal und eine zweite Verknüpfungseinrichtung zur UND-Verknüpfung des zweiten Eingangssignals mit dem zweiten Überwachungssignal auf.

Für den Fall, dass die Sensoreinrichtung einen passiven Sensor, wie zum Beispiel ein Not-Aus-Taster aufweist, liefert die Signalerzeugungseinrichtung ein zweites Überwachungssignal, wobei das erste Überwachungssignal über den extern angeschalteten passiven Sensor zur ersten und zweiten Steuereinrichtung geführt wird, während das zweite Überwachungssignal über den extern angeschalteten Sensor nur zur ersten Steuereinrichtung geführt wird, ohne dass eine Verknüpfungseinrichtung hierfür erforderlich ist.

Damit die erste Steuereinrichtung den Betriebszustand der zweiten Steuereinrichtung überwachen kann, weist sie einen Speicher auf, in dem die Übertragungsfunktion der hardwarebasierten Schalteinrichtung gespeichert ist. Der Mikroprozessor ist in der Lage, unter Verwendung des ersten modulierten Eingangssignals, dem zu ihm rückgekoppelten Ausgangssignal der zweiten Steuereinrichtung und der gespeicherten Übertragungsfunktion den Betriebszustand der zweiten Steuereinrichtung zu ermitteln. Denn aus dem bekannten Eingangssignal und der gespeicherten Übertragungsfunktion kann der Mikroprozessor das erwartete Ausgangssignal der zweiten Steuereinrichtung, genauer der hardwarebasierten Schaltungseinrichtung ermitteln. Stimmen rückgekoppeltes Ausgangssignal und berechnetes Ausgangssignal der zweiten Steuereinrichtung nicht überein, so liegt ein Fehler vor. Je nach Ausgestaltung der Sicherheitsvorrichtung deaktiviert daraufhin die erste Sicherheitseinrichtung das ihr zugeordnete erste Sicherheitsrelais und/oder das der zweiten Steuereinrichtung zugeordnete zweite Sicherheitsrelais, was dazu führt, dass die sicherheitstechnische Einrichtung in einen sicheren Zustand gefahren oder gehalten wird.

In bestimmten Applikationen ist es sinnvoll oder erforderlich, dass die Änderung des Ausgangssignals der zweiten Steuereinrichtung um eine bestimmte Zeit versetzt zur Änderung des Eingangssignals erfolgt. Das kann dadurch erreicht werden, dass eine Einrichtung zum Einstellen der Reaktionszeit des Monoflops vorgesehen ist. Damit der Mikroprozessor die eingestellte Reaktionszeit überwachen kann, weist die erste Steuereinrichtung einen Speicher zum Ablegen der Reaktionszeit des Monoflops auf. Da dem Mikroprozessor der ersten Steuereinrichtung sowohl das Eingangssignal als auch das Ausgangssignal der zweiten Steuereinrichtung zugeführt werden, kann er die tatsächliche Reaktionszeit des Monoflops berechnen. Stimmt sie nicht mit der abgelegten Reaktionszeit überein, kann die erste Steuereinrichtung dafür sorgen, dass das erste und/oder zweite Sicherheitsrelais deaktiviert wird. Die Reaktionszeit kann manuell in einem Speicher der ersten Steuereinrichtung hinterlegt oder automatisch vom Mikroprozessor der ersten Steuereinrichtung aus der Einstelleinrichtung ausgelesen werden. Schaltungstechnische Realisierungen für ein automatisiertes Auslesen der Reaktionszeit sind dem Fachmann bekannt und nicht Gegenstand der Erfindung.

Die Erfindung wird nachfolgend anhand zweier Ausführungsbeispiele in Verbindung mit den beiliegenden Zeichnungen näher erläutert. Es zeigen:
- Fig. 1: ein schematisches Blockschaltbild einer Sicherheitsvorrichtung zum mehrkanaligen Steuern einer sicherheitstechnischen Einrichtung, bei der ein Freigabesignal erzeugt wird,
- Fig. 2: den zeitlichen Verlauf eines Überwachungssignals,
sowohl mit der Überwachungssignal-Erzeugungseinrichtung 71, dem Schalter 76 als auch mit dem Speicher 74 verbunden. Die Überwachungssignal-Erzeugungseinrichtung 71 erzeugt ein Überwachungssignal, welches im ordnungsgemäßen Betrieb des Mikroprozessors den in Fig. 2 gezeigten Verlauf hat. Der Mikroprozessor 72 führt beispielsweise vordefinierte Diagnose- und/oder Überwachungsfunktionen durch, die bei ordnungsgemäßer Durchführung zu dem in Fig. 2 gezeigten Wechselsignal führen. Beispielsweise wird ein High-Pegel erzeugt, sobald der Mikroprozessor 72 eine sicherheitsrelevante Überwachungsroutine durchführt, wobei der High-Pegel solange erzeugt wird, wie die Überwachungsroutine abgearbeitet wird. Während der Überwachungsroutine kann der Mikroprozessor 72 vordefinierte Schnittstellen, den Inhalt des Speichers 74 und je nach Implementierung andere Kontrollpunkte abfragen. Wird eine gestartete sicherheitsrelevante Routine nicht beendet, so verharrt das Überwachungssignal im statischen Zustand, welches ein Gleichsignal darstellt. In ähnlicher Weise erzeugt die Überwachungssignal-Erzeugungseinrichtung 71 einen statischen Low-Pegel, sofern eine Überwachungsroutine überhaupt nicht gestartet wird.

In dem Speicher 74 stehen beispielsweise die Anweisungen für den Mikroprozessor 72 zur Durchführung der diagnose- und sicherheitsrelevanten Überwachungsroutinen. Das Ausgangssignal der Überwachungssignal-Erzeugungseinrichtung 71, welches vorzugsweise ein digitales Signal ist, wird an einen zweiten Eingang des UND-Gatters 62 der Eingangsstufe 62 angelegt.

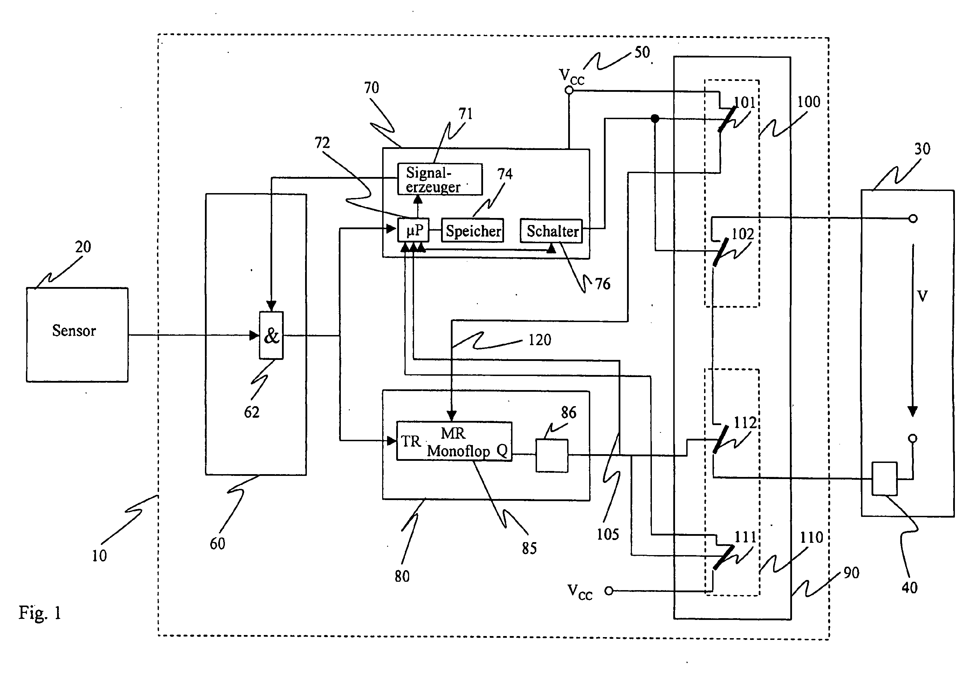

Neben der mikroprozessorgesteuerten Steuereinrichtung 70 weist die Sicherheitsvorrichtung 10 eine rein hardwaremäßig aufgebaute zweite Steuereinrichtung 80 auf, die als hardwaremäßige Realisierung im vorliegenden Beispiel ein Monoflop 82 aufweist. Das vom UND-Gatter 62 modulierte Ausgangssignal wird als Eingangssignal dem Mikroprozessor 72 der ersten Steuereinrichtung 70 und einem Triggereingang des Monoflops 85 der zweiten Steuereinrichtung 80 zugeführt. Um die sicherheitstechnische Einrichtung 30 einschalten oder abschalten zu können, weist die Sicherheitsvorrichtung 10 eine ansteuerbare Schalteinrichtung 90, auch Ausgangsstufe genannt, auf. Die Ausgangsstufe 90 weist ein erstes Sicherheitsrelais 100 auf, welches über den Schalter 76 der ersten Steuereinrichtung 70 angesteuert werden kann. Die erste Steuereinrichtung 70 und das Sicherheitsrelais 100 bilden zusammen den Kanal 1 der mehrkanaligen Steuervorrichtung 10. Das Sicherheitsrelais 100 weist zwangsgeführte Kontakte 101 und 102 auf, wobei der Kontakt 101 als Öffnerkontakt und der Kontakt 102 als Schließerkontakt fungieren. Unter zwangsgeführten Kontakten versteht man Kontakte, die niemals den gleichen Zustand annehmen können. Ist Kontakt 101 geschlossen, so ist zwangsweise der Kontakt 102 geöffnet und umgekehrt. Die Kontakte 101 und 102 des in Fig. 1 symbolisch dargestellten Sicherheitsrelais 100 sind über den Schalter 76 der ersten Steuereinrichtung ansteuerbar, wobei der Schalter 76 im Ansteuerungskreis des Sicherheitsrelais 100 liegt, während der Schließerkontakt 102 im Lastkreis der Sicherheitsrelais 100 liegt. An dem Öffnerkontakt 101 ist eine mit V_{cc} gekennzeichnete Energieversorgungsquelle 50 angeschlossen, die beispielsweise eine Spannung von 25 Volt bereitstellt. Die Energieversorgungsquelle 50 kann über den Öffnerkontakt 101 mit einem Master-Reset-Eingang des Monoflops 85 verbunden werden.

Der zweiten Steuereinrichtung 80 ist ebenfalls ein Sicherheitsrelais 110 zugeordnet, welches in der Ausgangsstufe 90 angeordnet ist. Das zweite Sicherheitsrelais 110 weist ebenfalls zwangsgeführte Kontakte auf. Die zwangsgeführten Kontakte weisen einen Öffnerkontakt 111 sowie einen Schließerkontakt 112 auf, der mit der sicherheitstechnischen Einrichtung 30 verbunden ist. Der Schließerkontakt 102 des Sicherheitsrelais 100 und der Schließerkontakt 112 des Sicherheitsrelais 110 sind in Reihe geschaltet, so dass die Steuereinrichtung 30 nur dann in Betrieb genommen werden kann, wenn beide Schließerkontakte geschlossen sind, das heißt wenn sowohl die erste Steuereinrichtung 70 als auch die zweite Steuereinrichtung 80 die Schließerkontakte 102 und 112 in den geschlossenen Zustand steuern. Die Steuereinrichtung 80 weist in ähnlicher Weise wie die Steuereinrichtung 70 einen Schalter 86 auf, der im Ansteuerkreis des Sicherheitsrelais 110 liegt. Das Steuersignal empfängt der Schalter 86 vom Monoflop 85, und zwar über dessen Q-Ausgang. Der Schließerkontakt 112 liegt im Lastkreis des Sicherheitsrelais 110. Der Öffnerkontakt 111 ist mit der Energieversorgungsquelle 50 und mit dem Mikroprozessor 72 der ersten Steuereinrichtung 70 verbunden. Auf diese Weise kann der Mikroprozessor 72 die Funktionsweise des Sicherheitsrelais 110 überwachen. Wenn zum Beispiel die Energieversorgungsquelle 50 auch bei einem Zustandswechsel des Sicherheitsrelais 110 nicht mit dem Mikroprozessor 71 verbunden wird, wird ein Fehler des Sicherheitsrelais 110 angenommen. Die zweite Steuereinrichtung 80 und das Sicherheitsrelais 110 bilden den Kanal 2 der Sicherheitsvorrichtung 10.

Die Versorgungsquelle 50 kann für notwendige Energieversorgung für die Steuereinrichtungen 70 und 80 sorgen.

Nachfolgend wird die Funktionsweise der in Fig. 1 gezeigten Sicherheitsvorrichtung 10 näher erläutert.

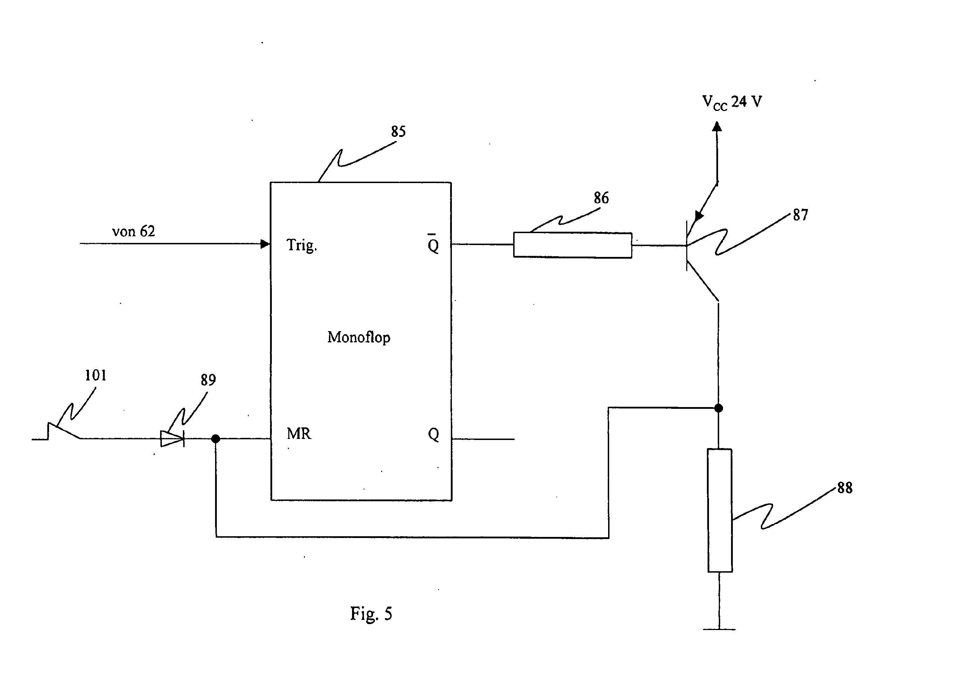

Angenommen sei, dass die sicherheitstechnische Einrichtung 30 in Betrieb genommen werden soll. Demzufolge wird über den Sensor 20 ein High-Pegel an das UND-Gatter 62 angelegt. Ferner wird angenommen, dass der Mikroprozessor 72 ordnungsgemäß arbeitet, so dass die Überwachungssignal-Erzeugungseinrichtung 71 das in Fig. 2 gezeigte Wechselsignal erzeugt und an den zweiten Eingang des UND-Gatters 62 anlegt. Am Ausgang des UND-Gatters 62 erscheint das dynamische Überwachungssignal, das sowohl dem Mikroprozessor 72 als auch dem Triggereingang des Monoflops 85 zugeführt. Arbeitet das Sicherheitsrelais 100 ordnungsgemäß, ist im Ruhezustand die Energieversorgungsquelle 50 über den Öffnerkontakt 101 an den Master-Reset-Eingang MR des Monoflops 85 angelegt, wie dies in Fig. 5 näher dargestellt ist. Da das vom UND-Gatter 62 kommende modulierte Eingangssignal ein Wechselsignal ist, steuert das Monoflop 85 den Schalter 86 an, der daraufhin den Schließerkontakt 112 des Sicherheitsrelais 110 schließt und den Öffnerkontakt 111 öffnet. Da auch der Mikroprozessor 72 das empfangene modulierte Eingangssignal als fehlerfrei interpretiert, veranlasst der Mikroprozessor den Schalter 76, den Schließerkontakt 102 des Sicherheitsrelais 100 zu schließen und den Öffnerkontakt 101 zu öffnen. Da beide Schließerkontakte 102 und 112 geschlossen sind, wird der Industrieroboter 40 an die Betriebsspannung V angeschaltet. Der Öffnerkontakt 101 des Sicherheitsrelais 100 ist geöffnet, so dass am MR-Eingang des Monoflops 85 keine Spannung mehr anliegt. Da das Monoflop 85 den Schließerkontakt 111 nur dann ansteuert, wenn auch Freigabesignal an dem MR-Eingang anliegt, ist eine Selbsthaltungsschaltung vorgesehen, die in Fig. 5 näher erläutert ist. Die Selbsthaltungsschaltung weist einen Schalter 87 auf, der beispielsweise als NPN-Transistor realisiert ist. Der Kollektor des Schalters 87 ist über einen Widerstand 88 auf Masse gelegt. Die Betriebsspannung V_{cc} ist am Emittereingang angelegt. Über einen Widerstand 86 ist die Basis des Transistors 87 mit dem *Q̅*-Ausgang des Monoflops 85 verbunden. Ein logischer Low-Pegel am *Q̅*-Ausgang, der während des Betriebs des Monoflops anliegt, sorgt dafür, dass die Betriebsspannung V_{cc} auf den MR-Eingang des Monoflops 85 rückgekoppelt wird, so dass die Betriebsspannung auch dann am MR-Eingang liegt, wenn der Öffner 101 des Sicherheitsrelais 100 geöffnet ist.

Nunmehr wird ein Notfall angenommen, bei dem der Sensor 20 zum Beispiel ein unerwünschtes Öffnen einer Schutztür signalisiert. Dies hat zur Folge, dass am Ausgang des Sensors 20 ein logischer Low-Pegel erzeugt wird, welcher den Ausgang des UND-Gatters 62 ebenfalls auf den logischen Low-Pegel setzt. Das Monoflop 85 erzeugt daraufhin am Q-Ausgang einen Low-Pegel, der den Schalter 86 derart ansteuert, dass der Schließerkontakt 112 geöffnet wird, woraufhin die sicherheitstechnische Einrichtung 30 abgeschaltet wird. Der Mikroprozessor 72 erkennt ebenfalls anhand des modulierten Eingangssignals, dass der Sensor 20 einen Notfall signalisiet hat und steuert über den Schalter 76 den Schließerkontakt 102 in den geöffneten Zustand. Im vorliegenden Beispiel wird die sicherheitstechnisch Einrichtung 30 somit von beiden Steuereinrichtungen 70 und 80 abgeschaltet.

Für den Fall, dass das Sicherheitsrelais 100 ordnungsgemäß funktioniert, wird in diesem Fall der zwangsgeführte Öffnerkontakt 101 geschlossen und die Betriebsspannung 50 an den Master-Reset-Eingang des Monoflops 85 angelegt. Wenn der Sensor 20 wieder einen High-Pegel erzeugt, kann der Industrieroboter, wie zuvor beschrieben, wieder an die Betriebsspannung V angeschaltet werden. Wenn jedoch das Sicherheitsrelais 100 fehlerhaft, das heißt der Schließerkontakt 102 öffnet nicht mehr, bleibt der Öffnerkontakt 101 im geöffneten Zustand und es wird kein Freigabesignal an das Monoflop 85 angelegt. Folglich kann die einmal ausgeschaltete sicherheitstechnische Einrichtung 30 nicht mehr angeschaltet werden. Denn in diesem Fall hält das Monoflop 85 den Schließerkontakt 112 des Sicherheitsrelais 110 im geöffneten Zustand. Mit anderen Worten steuert die Steuereinrichtung 80 den Schließerkontakt 112 nur dann in den geschlossenen Zustand an, wenn erstens der Mikroprozessor 72 der ersten Steuereinrichtung ordnungsgemäß arbeitet und somit die Überwachungssignal-Erzeugungseinrichtung 72 ein Wechselsignal erzeugt und zweitens das Sicherheitsrelais 100 ordnungsgemäß funktioniert, so dass über den Öffnerkontakt 101 das Freigabesignal an das Monoflop 85 angelegt wird.

Wichtig ist noch anzumerken, dass das in Fig. 5 gezeigte Monoflop 85 nach einem Abschalten der des Industrieroboters 40 selbst wieder zurückgesetzt wird. Wenn nach kurzer Zeit wieder ein Wechselsignal am Triggereingang des Monoflops 85 angelegt wird, kann das Monoflop 85 das Sicherheitsrelais 110 erst dann wieder ansteuern, wenn auch das Freigabesignal über den Öffnerkontakt 101 am MR-Eingang anliegt.

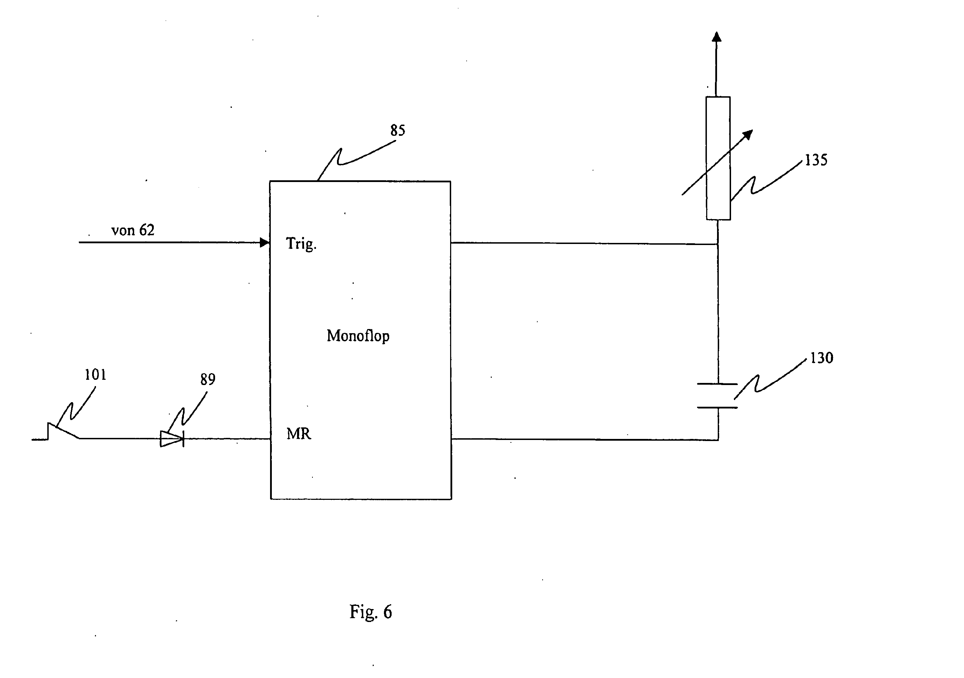

Bereits an dieser Stelle sei erwähnt, dass das Monoflop 85 über eine einstellbare Reaktionszeit verfügt. Hierzu ist beispielsweise ein RC-Glied mit dem Monoflop 85 verbunden, welches aus einem Potentiometer 135 und einem Kondensator bestehen kann. Diese Schaltung ist in Fig. 6 gezeigt. Über das Potentiometer 135 kann die Reaktionszeit des Monoflops 85 eingestellt werden. Die Reaktionszeit ist beispielsweise in dem Speicher 74 der ersten Steuereinrichtung 70 hinterlegt.

Der Ausgang der Steuereinrichtung 80 ist über eine Leitung 105 mit dem Mikroprozessor 72 verbunden. Der Mikroprozessor 72 kann das Betriebsverhalten der Steuereinrichtung 80 überwachen, indem er aus dem empfangenen modulierten Eingangssignal des UND-Gatters 62 und der Übertragungsfunktion des Monoflops 85 dessen Ausgangssignal berechnen kann. Die Übertragungsfunktion ist beispielsweise im Speicher 74 hinterlegt. Stimmen rückgekoppeltes Ausgangssignal des Monoflops 85 mit dem berechneten Ausgangssignal überein, so arbeitet die Steuereinrichtung 80 ordnungsgemäß. Andernfalls liegt ein Fehler vor. Erkennt der Mikroprozessor 72 einen solchen Fehler, kann er über den Schalter 76 den Schließerkontakt 102 des Sicherheitsrelais 100 öffnen, so dass die sicherheitstechnische Einrichtung 30 abgeschaltet wird. Alternativ oder fakultativ kann der Mikroprozessor 72 auch den Schalter 86 ansteuern, um den Schließerkontakt 112 des Sicherheitsrelais 110 zu öffnen.

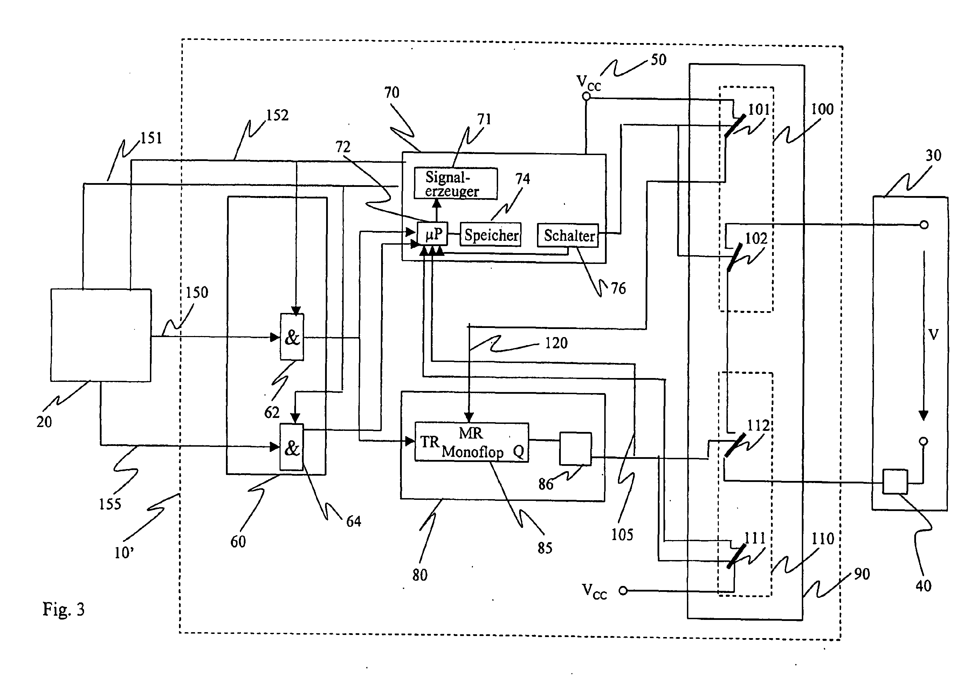

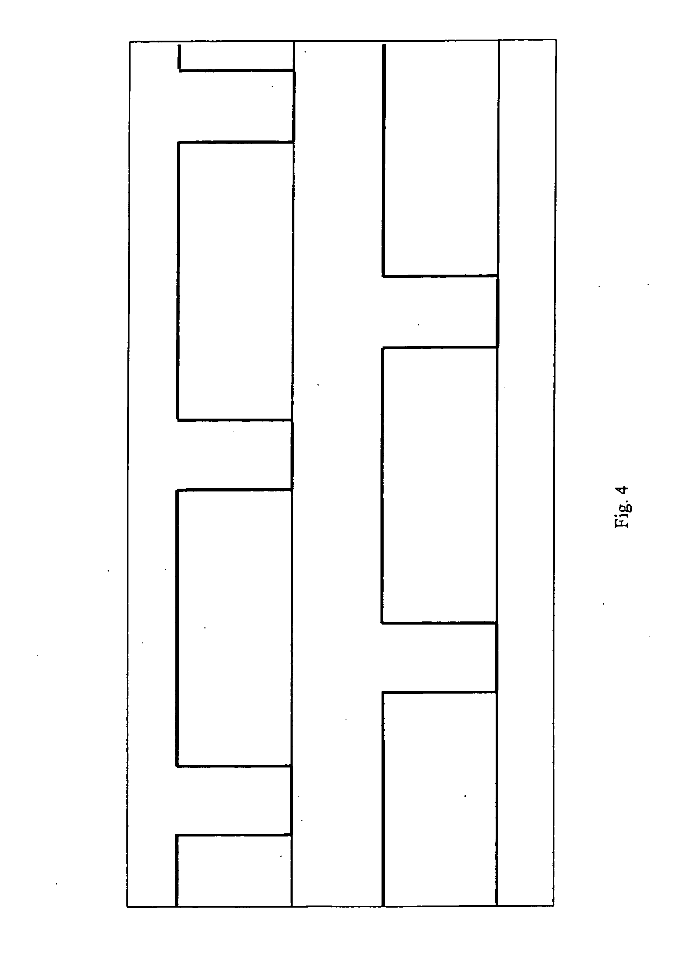

Fig. 3 zeigt eine weitere mehrkanalige Sicherheitsvorrichtung 10', die sich von der in Fig. 1 gezeigten Sicherheitsvorrichtung 10 dadurch unterscheidet, dass die Überwachungssignal-Erzeugungseinrichtung 71 der ersten Steuereinrichtung 70 zwei Überwachungssignale liefert und ein passiver Sensor 20, zum Beispiel ein Not-Aus-Taster, über digitale Anschlüsse (nicht dargestellt) an die Sicherheitsvorrichtung 10' angeschlossen ist. Wenn der Mikroprozessor 72 seine spezifizierten Funktionen ordnungsgemäß abarbeitet, erzeugt die Überwachungssignal-Erzeugungseinrichtung 71 die in Fig. 4 gezeigten Wechselsignale, die lediglich phasenverschoben zueinander sind. Auf diese Weise kann der an die Sicherheitsvorrichtung 10' angeschlossene passive Sensor 20 zweikanalig abgefragt werden, um so Kurzschlüsse und Querschlüsse in Eingangsleitungen 151 und 152 und in dessen Ausgangsleitungen 150 und 155 erkennen zu können. Die Eingangsstufe 60 weist neben dem UND-Gatter 62 ein weiteres UND-Gatter 64 auf. Das erste Überwachungssignal wird von der Überwachungssignal-Erzeugungseinrichtung 71 intern an einen Eingang des UND-Gatters 62 angelegt und über einen der digitalen Ausgänge und die Eingangsleitung 152 einem Eingang des Sensors 20 zugeführt. Das erste Überwachungssignal wird ferner über einen internen Taster 21 des Sensors 20 und die Ausgangsleitung 150 einem weiteren Eingang des UND-Gatters 62 zugeführt. In ähnlicher Weise wird das zweite Überwachungssignal von der Überwachungssignal-Erzeugungseinrichtung 71 intern an einen Eingang des UND-Gatters 64 angelegt und über den anderen digitalen Ausgang sowie über die Eingangsleitung 151 einem anderen Eingang des Sensors 20 zugeführt. Das zweite Überwachungssignal wird ferner über einen internen Taster 22 des Sensors 20 und die Ausgangsleitung 155 des Sensors 20 einem weiteren Eingang des UND-Gatters 64 zugeführt. Lediglich das Ausgangssignal des UND-Gatters 64 wird zum Mikroprozessor 72 zugeführt, während der Ausgang des UND-Gatters 62 sowohl mit dem Mikroprozessor 72 als auch mit dem Triggereingang des Monoflops 85 der zweiten Steuereinrichtung verbunden ist.

Die Funktionsweise der in Fig. 3 gezeigten Sicherheitsvorrichtung 10' entspricht im Wesentlichen der der in Fig. 1 gezeigten Sicherheitsvorrichtung 10, wobei zusätzlich, wie bereits erwähnt, Querschlüsse zwischen den Ausgangsleitungen 150 und 155 und den Eingangsleitungen 151 und 152 sowie Kurzschlüsse der Ausgangsleitungen 150 und 155 und/oder der Eingangsleitungen 151 und 152 festgestellt werden können. Tritt beispielsweise ein Kurzschluss zwischen der Ausgangsleitung 155 und Masse oder der Eingangsleitung 151 und Masse auf, so wird an den entsprechenden Eingang des UND-Gatters 64 ein Low-Pegel angelegt, der dazu führt, dass auch der Ausgang des UND-Gatters 64 auf einem Low-Pegel liegt. Dieser Zustand wird dem Mikroprozessor 72 signalisiert, der aus dem gemeldeten Zustand einen Fehler erkennt. Daraufhin steuert der Mikroprozessor den Schalter 76 im Ansteuerkreis des Sicherheitsrelais 100 derart an, dass der Schließerkontakt 102 geöffnet wird und somit die sicherheitstechnische Einrichtung 30 abgeschaltet werden kann.

In ähnlicher Weise wird der mit der Anschlussleitung 150 verbundene Eingang des UND-Gatters 62 auf Low gesetzt, wenn ein Kurzschluss hinsichtlich der Leitung 150 oder 152 nach Masse aufgetreten ist. Eine logische Null am Eingang des UND-Gatters 62 sorgt dafür, dass auch der Ausgang auf logisch Null liegt, so dass das Monoflop 85 ebenfalls eine logische Null am Ausgang liefert. Unter Ansprechen auf das Ausgangssignal des Monoflops 85 wird der Schalter 86 derart angesteuert, dass der Schließerkontakt 112 geöffnet und somit die sicherheitstechnische Einrichtung 30 abgeschaltet wird. Zudem steuert der Mikroprozessor 72 unter Ansprechen auf die logische Null am Ausgang des UND-Gatters 62 den Schalter 76 derart an, dass der Schließerkontakt 102 geöffnet und somit die sicherheitstechnische Einrichtung 30 abgeschaltet wird.

Tritt ein Querschluss zwischen den Eingangsleitungen 151 und 152 oder zwischen den Ausgangsleitungen 150 und 155 auf, so werden statische Signale mit gleichem Potential an die Eingänge der UND-Gatter 62 und 64 gelegt. Demzufolge führt das am Ausgang des UND-Gatters 62 anliegende statische Signal dazu, dass das Monoflops 85 den Schalter 86 derart ansteuert, dass der Schließerkontakt 112 öffnet und somit die sicherheitstechnische Einrichtung 30 abschaltet. Ferner kann das am Ausgang des UND-Gatters 62 und/oder 64 anliegende statische Signal dazu führen, dass der Mikroprozessor 72 den Schalter 76 derart ansteuert, dass der Schließerkontakt 102 geöffnet und somit die sicherheitstechnische Einrichtung 30 abgeschaltet wird.

Nunmehr wird der Fall betrachtet, dass die Ausgangsleitung 150 und/oder die Eingangsleitung 152 gegen die Betriebsspannung kurzgeschlossen wird. In diesem Fall liegen wieder zwei statische Signale gleichen Potentials am UND-Gatter 62 an, was dazu führt, dass das statische Ausgangssignal des UND-Gatters 62 das Monoflops 85 und somit den Schalter 86 derart ansteuert, dass der Schließerkontakt 112 geöffnet und somit die sicherheitstechnische Einrichtung 30 abgeschaltet wird. Ferner kann das am Ausgang des UND-Gatters 62 anliegende statische Signal dazu führen, dass der Mikroprozessor 72 den Schalter 76 derart ansteuert, dass der Schließerkontakt 102 geöffnet und somit die sicherheitstechnische Einrichtung 30 abgeschaltet wird.

Nunmehr wird der Fall betrachtet, dass die Ausgangsleitung 155 und/oder die Eingangsleitung 151 gegen die Betriebsspannung kurzgeschlossen wird. In diesem Fall liegen wieder zwei statische Signale gleichen Potentials am UND-Gatter 64 an. Unter Ansprechen auf das statische Ausgangssignal des UND-Gatters 62 steuert der Mikroprozessor 72 den Schalter 76 derart an, dass der Schließerkontakt 102 geöffnet und somit die sicherheitstechnische Einrichtung. 30 abgeschaltet wird.

Für den Fall, dass es sich bei dem Sensor 20 um einen aktiven Sensor handelt, fehlen die beiden Anschlussleitungen 151 und 152, so dass.die beiden von der Überwachungssignal-Erzeugungseinrichtung 71 erzeugten Überwachungssignale nicht dem Sensor 20 zugeführt werden.

Dank der Sicherheitsvorrichtung ist es nunmehr möglich, dass die zweite, hardwarebasierte Steuereinrichtung 80 die korrekte Funktionsweise des der ersten Steuereinrichtung 70 zugeordneten Sicherheitsrelais 100 kontrollieren und bei Auftritt eines Fehlers dafür sorgen kann, dass die sicherheitstechnische Einrichtung 30 abgeschaltet wird. Dadurch ist auch sichergestellt, dass die zweite Steuereinrichtung 80 erst dann den Betrieb aufnimmt, wenn das Freigabesignal des Kanals 1 am MR-Eingang anliegt.

## Patentansprüche

1. Sicherheitsvorrichtung zum mehrkanaligen Steuern einer sicherheitstechnischen Einrichtung (40), mit einer ersten, mikroprozessorgesteuerten Steuereinrichtung (70), die eine Signalerzeugungseinrichtung (71) zum Erzeugen eines ersten Überwachungssignals aufweist, welches den aktuellen Betriebszustand der ersten Steuereinrichtung (70) anzeigt,
einer zweiten, hardwarebasierten Steuereinrichtung (80),
einer von der ersten und zweiten Steuereinrichtung (70, 80) ansteuerbaren Schalteinrichtung (90), die die sicherheitstechnische Einrichtung (30, 40) einschalten oder in einen gesicherten Zustand fahren kann,
wobei die zweite Steuereinrichtung (80) eine hardwarebasierte Schalteinrichtung (85) aufweist, die unter Ansprechen auf das Überwachungssignal die Schalteinrichtung (90) derart ansteuert, dass die sicherheitstechnische Einrichtung (30, 40) bei einem fehlerhaften Betrieb der ersten Steuereinrichtung (70) in einen sicheren Zustand gefahren werden kann, **gekennzeichnet durch**
eine der ersten Steuereinrichtung (70) zugeordnete Einrichtung (50, 101) zum Erzeugen eines Freigabesignals für die zweite Steuereinrichtung (80)
wobei
die Schalteinrichtung (90) ein erstes, der ersten Steuereinrichtung (70) zugeordnetes Sicherheitsrelais (100) und ein zweitens der zweiten Steuereinrichtung (80) zugeordnetes Sicherheitsrelais (110) aufweist, wobei jedes Sicherheitsrelais wenigstens einen Öffnerkontakt (101; 111) und einen Schließerkontakt (102; 112) aufweist, die miteinander starr gekoppelt sind, und wobei
das Freigabesignal nur bei fehlerfreier Funktion des ersten Sicherheitsrelais (100) erzeugt wird.

2. Sicherheitsvorrichtung nach Anspruch 1,
**dadurch gekennzeichnet, dass**
die Signalerzeugungseinrichtung (71) ein Wechselsignal erzeugt, wenn die erste Steuereinrichtung (70) fehlerfrei arbeitet, und ein Gleichsignal erzeugt, wenn die erste Steuereinrichtung (70) fehlerhaft arbeitet.

3. Sicherheitsvorrichtung nach Anspruch 2,
**dadurch gekennzeichnet, dass**
die hardwarebasierte Schalteinrichtung (85) ein Monoflop aufweist.

4. Sicherheitsvorrichtung nach Anspruch 2,
**dadurch gekennzeichnet, dass**
das Monoflop (85) einen Master-Reset-Eingang zum Anlegen des Freigabesignals und einen Triggereingang aufweist.

5. Sicherheitsvorrichtung nach Anspruch 4,
**gekennzeichnet durch**
eine dem Monoflop (85) zugeordnete Schaltung (86, 87, 88) zum Halten des Master-Reset-Eingangs auf dem Pegel des Freigabesignals, wobei das Monoflop (85) zurückgesetzt wird, wenn am Triggereingang kein Signal oder ein statisches Signal anliegt.

6. Sicherheitsvorrichtung nach einem der vorhergehenden Ansprüche,
**gekennzeichnet durch**
eine mit der ersten, mikroprozessorgesteuerten Einrichtung (70) und der zweiten Steuereinrichtung (80) verbundenen Eingangsstufe (60), die zum Modulieren eines von einer extern anschaltbaren Sensoreinrichtung (20) kommenden Eingangssignals mit dem von der Signalerzeugungseinrichtung (71) erzeugten ersten Überwachungssignal ausgebildet ist, wobei die erste, mikroprozessorgesteuerte Steuereinrichtung (70) und/oder die zweite Steuereinrichtung (80) unter Ansprechen auf das modulierte Eingangssignal die sicherheitstechnische Einrichtung (40) in einen sicheren Zustand steuern kann, wobei das erste modulierte Eingangssignal an einen Triggereingang der hardwarebasierten Schaltungseinrichtung (80, 85) angelegt ist.

7. Sicherheitsvorrichtung nach Anspruch 6,
**dadurch gekennzeichnet, dass**
die Signalerzeugungseinrichtung (71) ein zweites Überwachungssignal liefert,
die Eingangsstufe (60) zum Modulieren eines von der extern anschaltbaren Sensoreinrichtung (20) kommenden zweiten Eingangssignals mit dem von der Signalerzeugungseinrichtung (71) erzeugten zweiten Überwachungssignal ausgebildet ist, wobei das zweite modulierte Eingangssignal zur Auswertung nur der ersten Steuereinrichtung (70) zugeführt wird.

8. Sicherheitsvorrichtung nach Anspruch 7,
**dadurch gekennzeichnet, dass**
die Eingangsstufe (60) eine erste Verknüpfungseinrichtung (62) zur UND-Verknüpfung des ersten Eingangssignals mit dem ersten Überwachungssignal und eine zweite Verknüpfungseinrichtung (64) zur UND-Verknüpfung des zweiten Eingangssignals mit dem zweiten Überwachungssignal aufweist.

9. Sicherheitsvorrichtung nach einem der Ansprüche 1 bis 5,
**dadurch gekennzeichnet, dass**
die Signalerzeugungseinrichtung (71) ein zweites Überwachungssignal liefert,
das erste Überwachungssignal über einen extern angeschalteten passiven Sensor zur ersten und zweiten Steuereinrichtung (70, 80) geführt wird und dass das zweite Überwachungssignal über den extern angeschalteten Sensor (20) zur ersten Steuereinrichtung (70) geführt wird.

10. Sicherheitsvorrichtung nach einem der vorhergehenden Ansprüche,
**dadurch gekennzeichnet, dass**
die erste Steuereinrichtung (70) einen Speicher (74) aufweist, in dem die Übertragungsfunktion der hardwarebasierten Schalteinrichtung (80, 85) gespeichert ist, und wobei der
Mikroprozessor (72) der ersten Steuereinrichtung (70) unter Verwendung des ersten modulierten Eingangssignals, dem Ausgangssignal der zweiten Steuereinrichtung (80) und der Übertragungsfunktion den Betriebszustand der zweiten Steuereinrichtung (80) ermittelt.

11. Sicherheitsvorrichtung nach Anspruch 3,
**gekennzeichnet durch**
eine Einrichtung (130, 135) zum Einstellen der Reaktionszeit des Monoflops, wobei die erste Steuereinrichtung (70) einen Speicher zum Ablegen der aktuellen Reaktionszeit des Monoflops (85) aufweist und wobei der Mikroprozessor (71) zum Überwachen der Reaktionszeit des Monoflops (85) ausgebildet ist.

## Claims

1. Safety apparatus for multichannel control of a safety-related device (40), having a first, microprocessor-controlled control device (70) which has a signal generation device (71) for generating a first monitoring signal which indicates the current operating state of the first control device (70),
a second, hardware-based control device (80), and
a switching device (90) which can be actuated by the first and second control devices (70, 80) and can turn on the safety-related device (30, 40) or drive it into a secured state,
wherein the second control device (80) has a hardware-based switching device (85) which, in response to the monitoring signal, actuates the switching device (90) in such a manner that the safety-related device (30, 40) can be driven into a safe state in the case of faulty operation of the first control device (70),
**characterised by**
a device (50, 101) allocated to the first control device (70) for generating an enable signal for the second control device (80),
wherein
the switching device (90) comprises a first safety relay (100) allocated to the first control device (70), and a second safety relay (110) allocated to the second control device (80), wherein each safety relay has at least one break contact (101; 111) and one make contact (102; 112) which are rigidly coupled to one another, and wherein the enable signal is generated only in the case of a fault-free function of the first safety relay (100).

2. Safety apparatus as claimed in claim 1,
**characterised in that**
the signal generation device (71) generates an alternating current signal when the first control device (70) is operating in a fault-free manner, and generates a direct current signal when the first control device (70) is operating in a faulty manner.

3. Safety apparatus as claimed in claim 2,
**characterised in that**
the hardware-based switching device (85) has a monoflop.

4. Safety apparatus as claimed in claim 2,
**characterised in that**
the monoflop (85) has a master reset input for applying the enable signal and has a trigger input.

5. Safety apparatus as claimed in claim 4,
**characterised by**
a circuit (86, 87, 88) allocated to the monoflop (85) for holding the master reset input at the level of the enable signal, wherein the monoflop (85) is reset when no signal or a static signal is present at the trigger input.

6. Safety apparatus as claimed in any one of the preceding claims,
**characterised by**
an input stage (60) which is connected to the first, microprocessor-controlled device (70) and the second control device (80) and is designed to modulate an input signal coming from an externally connectable sensor device (20) with the first monitoring signal generated by the signal generation device (71), wherein, in response to the modulated input signal, the first, microprocessor-controlled control device (70) and/or the second control device (80) can control the safety-related device (40) into a safe state, wherein the first modulated input signal is applied to a trigger input of the hardware-based switching device (80, 85).

7. Safety apparatus as claimed in claim 6,
**characterised in that**
the signal generation device (71) supplies a second monitoring signal,
the input stage (60) is designed to modulate a second input signal coming from the externally connectable sensor device (20) with the second monitoring signal generated by the signal generation device (71), wherein the second modulated input signal is supplied for evaluation only to the first control device (70).

8. Safety apparatus as claimed in claim 7,
**characterised in that**
the input stage (60) has a first logic device (62) for performing an AND-operation on the first input signal and the first monitoring signal, and has a second logic device (64) for performing an AND-operation on the second input signal and the second monitoring signal.

9. Safety apparatus as claimed in any one of claims 1 to 5,
**characterised in that**
the signal generation device (71) supplies a second monitoring signal,
the first monitoring signal is passed via an externally connected passive sensor to the first and the second control device (70, 80) and **in that**
the second monitoring signal is passed via the externally connected sensor (20) to the first control device (70).

10. Safety apparatus as claimed in any one of the preceding claims,
**characterised in that**
the first control device (70) has a memory (74) in which the transfer function of the hardware-based switching device (80, 85) is stored, and wherein
the microprocessor (72) of the first control device (70) determines the operating state of the second control device (80) using the first modulated input signal, the output signal of the second control device (80) and the transfer function.

11. Safety apparatus as claimed in claim 3,
**characterised by**
a device (130, 135) for adjusting the reaction time of the monoflop, wherein the first control device (70) has a memory for storing the current reaction time of the monoflop (85) and wherein the microprocessor (71) is designed to monitor the reaction time of the monoflop (85).

## Revendications

1. Système de sécurité pour la commande par plusieurs canaux d'un dispositif (40) technique de sécurité, avec un premier dispositif de commande (70) commandé par microprocesseur, lequel comporte un dispositif de génération de signal (71) pour la génération d'un premier signal de surveillance indiquant le mode de service actuel du premier dispositif de commande (70), un deuxième dispositif de commande (80) à base matérielle, un dispositif de commutation (90) commandable par le premier et le deuxième dispositif de commande (70, 80), lequel peut activer le dispositif (30, 40) technique de sécurité ou le commuter en mode sécurisé, le deuxième dispositif de commande (80) comportant un dispositif de commutation (85) à base matérielle, lequel commande le dispositif de commutation (90) en réaction au signal de surveillance, de telle manière que le dispositif (30, 40) technique de sécurité puisse être commuté en mode sécurisé en cas de fonctionnement défectueux du premier dispositif de commande (70), **caractérisé par** un dispositif (50, 101) associé au premier dispositif de commande (70) pour la génération d'un signal de validation pour le deuxième dispositif de commande (80), le dispositif de commutation (90) comportant un premier relais de protection (100) associé au premier dispositif de commande (70) et un deuxième relais de protection (110) associé au deuxième dispositif de commande (80), chaque relais de protection comportant au moins un contact d'ouverture (101 ; 111) et un contact de fermeture (102 ; 112) fixement accouplés l'un à l'autre, le signal de validation n'étant généré qu'en cas de fonctionnement non défectueux du premier relais de protection (100).

2. Système de sécurité selon la revendication 1, **caractérisé en ce que** le dispositif de génération de signal (71) génère un signal alternatif quand le premier dispositif de commande (70) fonctionne sans défaut, et un signal constant quand le premier dispositif de commande (70) fonctionne de manière défectueuse.

3. Système de sécurité selon la revendication 2, **caractérisé en ce que** le dispositif de commutation (85) à base matérielle comporte une bascule monostable.

4. Système de sécurité selon la revendication 2, **caractérisé en ce que** la bascule monostable (85) présente une entrée Master-Reset pour l'application du signal de validation et une entrée de déclencheur.

5. Système de sécurité selon la revendication 4, **caractérisé par** un circuit (86, 87, 88) associé à la bascule monostable (85) pour le maintien de l'entrée Master-Reset au niveau du signal de validation, la bascule monostable (85) étant réinitialisée quand aucun signal n'est appliqué, ou quand un signal statique est appliqué à l'entrée de déclencheur.

6. Système de sécurité selon l'une des revendications précédentes, **caractérisé par** un étage d'entrée (60) relié au premier dispositif (70) commandé par microprocesseur et au deuxième dispositif de commande (80), prévu pour moduler un signal d'entrée provenant d'un dispositif de capteur (20) commutable extérieurement avec le premier signal de surveillance généré par le dispositif de génération de signal (71), le premier dispositif (70) commandé par microprocesseur et/ou le deuxième dispositif de commande (80) pouvant commander le dispositif (40) technique de sécurité vers un mode sécurisé en réaction au signal d'entrée modulé, le premier signal d'entrée modulé étant appliqué à une entrée de déclencheur du dispositif de circuit (80, 85) à base matérielle.

7. Système de sécurité selon la revendication 6, **caractérisé en ce que** le dispositif de génération de signal (71) délivre un deuxième signal de surveillance, l'étage d'entrée (60) étant prévu pour la modulation d'un deuxième signal d'entrée provenant du dispositif de capteur (20) commutable extérieurement avec le deuxième signal de surveillance généré par le dispositif de génération de signal (71), le deuxième signal d'entrée modulé n'étant transmis qu'au premier dispositif de commande (70) pour analyse.

8. Système de sécurité selon la revendication 7, **caractérisé en ce que** l'étage d'entrée (60) comprend un premier dispositif opérateur (62) pour l'opération ET du premier signal d'entrée avec le premier signal de surveillance et un deuxième dispositif opérateur (64) pour l'opération ET du deuxième signal d'entrée avec le deuxième signal de surveillance.

9. Système de sécurité selon l'une des revendications 1 à 5, **caractérisé en ce que** le dispositif de génération de signal (71) délivre un deuxième signal de surveillance, **en ce que** le premier signal de surveillance est transmis au premier et au deuxième dispositif de commande (70, 80) par un capteur passif commuté extérieurement, et **en ce que** le deuxième signal de surveillance est transmis au premier dispositif de commande (70) par le capteur (20) commuté extérieurement.

10. Système de sécurité selon l'une des revendications précédentes, **caractérisé en ce que** le premier dispositif de commande (70) comporte une mémoire (74) où est sauvegardée la fonction de transmission du dispositif de commutation (80, 85) à base matérielle, et où le microprocesseur (72) du premier dispositif de commande (70) détecte le mode de service du deuxième dispositif de commande (80) en recourant au premier signal d'entrée modulé, au signal de sortie du deuxième dispositif de commande (80) et à la fonction de transmission.

11. Système de sécurité selon la revendication 3, **caractérisé par** un dispositif (130, 135) de réglage du temps de réaction de la bascule monostable, le premier dispositif de commande (70) comportant une mémoire pour la sauvegarde du temps de réaction actuel de la bascule monostable (85), et le microprocesseur (71) étant prévu pour surveiller le temps de réaction de la bascule monostable (85).
